# EUROPÄISCHE PATENTSCHRIFT

(11) **EP 2 526 309 B1**
(45) Veröffentlichungstag und Bekanntmachung des Hinweises auf die Patenterteilung: **31.12.2014**
(21) Anmeldenummer: 11701619.6
(22) Anmeldetag: 19.01.2011
(51) Int. Cl.: F16C 11/06

(54) **KUGELGELENK**
BALL JOINT
ARTICULATION À ROTULE

(30) Priorität: 19.01.2010 DE 102010005134
(43) Veröffentlichungstag der Anmeldung: 28.11.2012
(73) Patentinhaber: TRW Automotive GmbH, 73553 Alfdorf (DE)
(72) Erfinder: FORTHAUS, Uwe, 40223 Düsseldorf (DE); PHIAPHAKDY, Vat, 41363 Jüchen (DE); SCHAUMANN, Lothar, 40855 Ratingen (DE); WALTER, Harald, 47179 Duisburg (DE); WÖLKI, Dagmar, 40724 Hilden (DE)
(74) Vertreter: Prinz & Partner mbB
(86) Internationale Anmeldenummer: PCT/EP2011/000210
(87) Internationale Veröffentlichungsnummer: WO 2011/088998

(56) Entgegenhaltungen:
- EP-A1- 0 343 881
- DE-A1-102007 001 933
- DE-A1-102007 044 668
- JP-A- 10 318 247
- US-A1- 2004 146 338
- US-A1- 2009 010 706

## Beschreibung

Die Erfindung betrifft ein Kugelgelenk nach dem Oberbegriff von Anspruch 1.

Kugelgelenke werden in vielfältiger Form beispielsweise im Fahrzeugbau eingesetzt. Für solche Kugelgelenke ist es bekannt, in dem Gelenkgehäuse eine Lagerschale aufzunehmen, wobei ein Kugelkopf eines Kugelzapfens gelenkig in der Lagerschale angeordnet ist. Die Lagerschale besteht zumeist aus einem Kunststoff, was zu günstigen Gleit- bzw. Reibwerten zwischen dem Kugelkopf und der Lagerschale und gleichzeitig zu günstigen Herstellungskosten führt. Der Verschleiß, der über der Lebensdauer des Kugelgelenks auftritt, wird durch eine axiale Vorspannung ausgeglichen, die auf den Kugelkopf im Wesentlichen in Richtung einer Längsachse des Kugelzapfens aufgebracht wird. Durch eine solche Vorspannung kann freies Spiel im Gelenk verhindert werden.

Der Stand der Technik zeigt vielfältige Technologien, um den Kugelkopf eines Kugelgelenks gegenüber dem Gehäuse in Vorspannung zu versetzen.

US 5,188,477 zeigt ein einseitig offenes Axial-Kugelgelenk, bei dem zwischen einer Bodenfläche im Innenraum des Gehäuses und der Lagerschale ein Elastomerelement angeordnet ist. Die Lagerschale ist dabei derart in dem Gehäuse aufgenommen, dass das Elastomerelement unter Druck gesetzt ist. Somit übt das Elastomerelement auf die Lagerschale eine axiale Kraft aus, so dass der innerhalb der Lagerschale angeordnete Kugelkopf im Wesentlichen in einer Richtung der Längsachse des Kugelzapfens vorgespannt wird.

US 3,226,142 und US 4,225,260 zeigen jeweils ein Radialkugelgelenk, bei dem zwischen einem Gehäusedeckel, der eine Öffnung des Gelenkgehäuses verschließt, und einem randseitigen Schulterabschnitt der Lagerschale ein Elastomerring eingebracht ist. Im montierten Zustand des Gelenks spannt dieser Elastomerring die Lagerschale in axialer Richtung, so dass dadurch der Kugelkopf im Wesentlichen in Richtung einer Längsachse des Kugelzapfens vorgespannt ist. Wie bereits erläutert, wirkt eine solche Vorspannung dem Verschleiß über die Lebensdauer des Gelenks entgegen und verhindert das Auftreten von freiem Spiel oder dergleichen.

Bei Kugelgelenken eines anderen Typs ist es bekannt, die Lagerschale gegenüber dem Gehäusedeckel durch Verwendung einer Metall-Spiralfeder unter Vorspannung zu setzen. Dies ist beispielsweise aus EP 348 642 oder DE 1 678 052 bekannt. Die Spiralfeder stützt sich am Gehäusedeckel ab und drückt die Lagerschale bzw. eine Oberschale der Lagereinrichtung gegen den Kugelkopf. Hierbei bestimmt die Vorspannung der Spiralfeder den Anpressdruck der Lagerschale auf den Kugelkopf und legt gleichzeitig die Betriebskennwerte des Kugelgelenks fest. Gleichzeitig kann durch die Vorspannung der Lagerschale ein Verschleiß innerhalb des Kugelgelenks ausgeglichen werden.

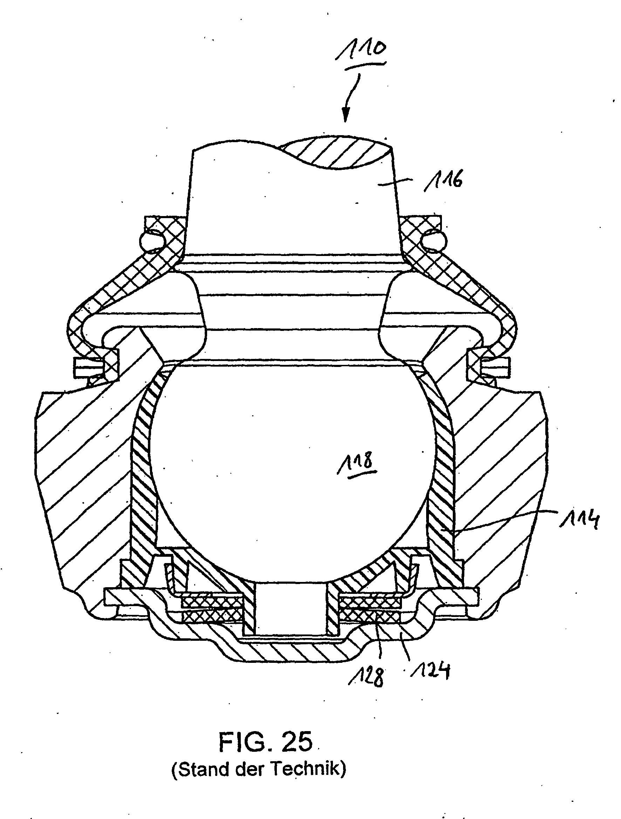

Aus dem Stand der Technik ist des Weiteren ein Kugelgelenk 110 bekannt (vgl. Fig. 25), bei dem zwischen dem Gehäusedeckel 124 und der Lagerschale 114 im montierten Zustand des Gelenks ein Federsystem in Form einer Tellerfeder 128 vorgesehen ist. Durch die Vorspannung dieser Tellerfeder 128 wird die Lagerschale 114 gegen den Kugelkopf 118 des Kugelzapfens 116 gedrückt, so dass auch bei auftretendem Verschleiß der Lagerschale 114 ein ständiger Kontakt zwischen der Lagerschale 114 und dem Kugelkopf 118 gegeben ist und kein freies Spiel zwischen dem Kugelkopf 118 und der Lagerschale 114 entsteht. Die Tellerfeder 128 ist als Reihenschaltung von Federelementen zu verstehen, und gewährleistet eine vorbestimmte gewünschte Federkennlinie. Nachteil dieses bekannten Gelenks ist der vergleichsweise große Platzbedarf für die Tellerfeder und deren hohe Materialkosten.

Des Weiteren sind beispielsweise aus der US 2004/0146338 A1 oder der US 2009/0010706 A1 Kugelgelenke mit mehreren Federelementen bekannt, die in Reihe und/oder parallel geschaltet sind, um eine bessere Anpassung der Federfunktion bereitzustellen. Aufgabe der Erfindung ist es, ein Kugelgelenk zu schaffen, bei dem eine Vorspannung des Kugelkopfes gegenüber dem Gehäuse mit einfachen und insbesondere Platz sparenden Mitteln erzielt wird.

Erfindungsgemäß wird diese Aufgabe durch ein Kugelgelenk mit den Merkmalen von Anspruch 1 gelöst. Vorteilhafte Weiterbildungen der Erfindung sind in den abhängigen Ansprüchen definiert.

Ein wesentlicher Aspekt der Erfindung beruht auf der Erkenntnis, dass das Federsystem, mittels dessen der Kugelkopf vorgespannt wird, aus einer Mehrzahl von Federelementen besteht, die parallel und/oder in Reihe geschaltet sind, wobei zumindest ein Federelement dieses Federsystems aus einem Polymermaterial oder aus einem Elastomermaterial hergestellt ist. Je nach Vorgabe eines jeweiligen Einsatzfalles des Kugelgelenks kann die geforderte resultierende Kennlinie des Federsystems durch eine geeignete Verschaltung der Federelemente, sei es in Reihe und/oder parallel, präzise eingestellt werden. Die resultierende Kennlinie kann linear, multilinear oder nichtlinear sein kann. Die resultierende Kennlinie des Federsystems ist insbesondere für den Fall von Bedeutung, dass das Kugelgelenk einer äußeren Last unterworfen ist, z.B. in axialer Richtung bzw. in Richtung einer Längsachse des Kugelzapfens. Durch die Wahl eines Polymermaterials oder eines Elastomermaterials für zumindest ein Federelement des Federsystems kann zudem eine preiswerte und insbesondere Platz sparende Ausgestaltung des Federsystems erzielt werden.

Zweckmäßigerweise ist die Lagerschale aus einem Kunststoff- bzw. Polymermaterial hergestellt. Dies führt zu vorteilhaften Reibwerten zwischen der Lagerschale und dem Kugelkopf. Durch die Vorspannung, die durch das Federsystem auf den Kugelkopf im Wesentlichen in Richtung einer Längsachse des Kugelzapfens ausgeübt wird, wird zudem eine Nachstellwirkung bei Setzeffekten der Kunststoff-Lagerschale, die bei Belastung oder Alterung eintreten können, erzielt. In Folge dessen wird das Auftreten von freiem Spiel über der Lebensdauer des Kugelgelenks zuverlässig verhindert, auch dann, wenn das Kugelgelenk großen Belastungen in Richtung der Längsachse des Kugelzapfens ausgesetzt wird.

Bezüglich der Verschaltung der Mehrzahl von Federelementen des Federsystems versteht sich, dass diese Federelemente bei montiertem Kugelgelenk vorzugsweise in Reihe geschaltet sind. Die Konfiguration der an dem Federsystem beteiligten Federelemente kann so gewählt sein, dass bei Auftreten eines Lastfalls dann zusätzlich eine Parallelschaltung der Federelemente erzeugt wird, die sich mit der Reihenschaltung der Federelemente überlagert. Im Hierdurch kann eine Überlastung bzw. eine Schädigung des Federsystems vermieden werden. Alternativ ist es auch möglich, dass bereits bei montiertem Kugelgelenk die Federelemente, die das Federsystem bilden, sowohl in Reihe als auch parallel geschaltet sind.

Erfindungsgemäß ist dieses Federelement ein Teil der Lagerschale, und aus dem Polbereich der Lagerschale gebildet. Diese Integration des zumindest einen Federelements in das Bauteil der Lagerschale führt zu einer vorteilhaften Raum- und Kostenersparnis.

Falls ein Federelement des Federsystems aus einem Polymermaterial oder aus einem Elastomermaterial hergestellt ist, kann bei einer vorteilhaften Weiterbildung der Erfindung dieses Federelement an der Lagerschale angeformt sein.

In vorteilhafter Weiterbildung der Erfindung kann ein weiteres Federelement des Federsystems separat von der Lagerschale hergestellt sein, wobei dieses Federelement im montierten Zustand des Gelenks an der Lagerschale angeordnet ist. Hierbei kontaktiert dieses weitere Federelement sowohl die Lagerschale als auch das Gehäuse bzw. ein Gehäusedeckel, mit dem eine Öffnung des Gehäuses verschlossen ist. Alternativ hierzu kann dieses weitere Federelement auch direkt an der Lagerschale angeformt sein, vorzugsweise durch ein Zweikomponenten-Spritzgießen. Ein direktes Anformen des weiteren Federelements an der Lagerschale hat den Vorteil, dass eine irrtümliche Montage dieses weiteren Federelements während der Fertigung des Kugelgelenks ausgeschlossen ist.

In vorteilhafter Weiterbildung der Erfindung kann das weitere Federelement, das an der Lagerschale angeordnet bzw. daran angeformt ist, aus einem Elastomermaterial hergestellt sein. Im Allgemeinen weist ein Elastomermaterial eine andere Steifigkeit als ein Polymermaterial bzw. ein Metall auf, und eignet sich zum Einstellen von insbesondere progressiven Federkennlinien. Hierbei ist es von Vorteil, wenn das weitere Federelement, das aus einem Elastomermaterial hergestellt ist, in einem Hohlraum aufgenommen ist, der einerseits zwischen der Lagerschale und andererseits dem Gehäuse bzw. dem Gehäusedeckel ausgebildet ist. Im montierten Zustand des Gelenks kann dieser Hohlraum durch das Elastomer-Federelement mehrheitlich ausgefüllt sein. Ab einer bestimmten axialen Belastung des Kugelgelenks füllt das Elastomer-Federelement den Hohlraum im Wesentlichen aus, so dass dies einen progressiven Anstieg der Federkennlinie des Federsystems zur Folge hat.

In vorteilhafter Weiterbildung der Erfindung kann das Elastomer-Federelement mit seinem Querschnitt an den Hohlraum zwischen Lagerschale und Gehäuse bzw. Gehäusedeckel angepasst sein. Dies hat den Vorteil, dass bei einer axialen Belastung des Kugelgelenks der Hohlraum gezielt durch das Elastomer-Federelement ausgefüllt wird, um den gewünschten progressiven Verlauf der Federkennlinie des Federsystems zu gewährleisten. Hierbei kann das Elastomer-Federelement angrenzend an Körperfugen oder dergleichen an einer Innenfläche des Gehäuses bzw. des Gehäusedeckels geeignete Ausnehmungen aufweisen, so dass bei einem Ausfüllen des Hohlraums durch das Elastomer-Federelement am letzteren keine Schädigungen entstehen.

In vorteilhafter Weiterbildung der Erfindung kann in dem Gelenkgehäuse ein Verschlusselement befestigt sein, durch den die Lagerschale innerhalb des Gelenkgehäuses verliersicher gehalten wird. Der Verschlussdeckel kann in Form eines Verschlussrings oder in Form eines Verschlussdeckels ausgebildet sein. Bei einer solchen Ausführungsform kann das Verschlusselement gleichzeitig die Funktion eines Federelements ausüben, und dabei Teil eines Federsystems sein, mittels dessen der Kugelkopf gegen das Gelenkgehäuse vorgespannt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Im Folgenden wird die Erfindung anhand von in der Zeichnung gezeigten Ausführungsbeispielen näher erläutert. In der Zeichnung zeigen:
Figur 1 einen Längsschnitt durch ein erfindungsgemäßes Kugelgelenk in einem fertig montierten Zustand,
Figur 2 eine vergrößerte Ansicht des Bereichs I von Figur 1,
Figur 3 eine Perspektivansicht einer Lagerschale zur Verwendung bei einem Kugelgelenk von Figur 1,
Figur 4 eine Querschnittsansicht durch die Lagerschale von Figur 3,
Figur 5 einen Längsschnitt durch ein erfindungsgemäßes Kugelgelenk in einem vormontierten Zustand, wenn ein Gehäusedeckel aufgesetzt, aber noch nicht am Gehäuse befestigt ist,
Figur 6 eine vergrößerte Ansicht des Bereichs II von Figur 5,
Figur 7 eine Querschnittsansicht eines elastischen Formrings, zur Verwendung bei dem Kugelgelenk von Figur 1,
Fig. 8 einen Auschnitt des Kugelgelenks von Fig. 1, analog zur vergrößerten Ansicht von Fig. 2, wobei zum besseren Verständnis darin Federelemente prinzipiell gezeigt sind,
Figur 9 ein Feder-Ersatzschaltbild für die Darstellung des Kugelgelenks von Fig. 8,
Figuren 10a - c verschiedene mögliche Federkennlinien für das erfindungsgemäße Kugelgelenk,
Fig. 11 einen Längsschnitt durch das erfindungsgemäße Kugelgelenk von Fig. 1, bei Auftreten eines axialen Lastfalls,
Fig. 12 eine vergrößerte Ansicht des linken Bereichs von Figur 1,
Fig. 13 ein allgemeines Feder-Ersatzschaltbild für verschiedene mögliche Ausführungsformen des erfindungsgemäßen Kugelgelenks,
Fig. 14 einen Längsschnitt durch ein erfindungsgemäßes Kugelgelenk in einem fertig montierten Zustand nach einer weiteren Ausführungsform,
Fig. 15 eine vergrößerte Ansicht des linken Bereichs von Figur 14,
Fig. 16 einen Längsschnitt durch ein erfindungsgemäßes Kugelgelenk in einem fertig montierten Zustand nach einer noch weiteren Ausführungsform,
Fig. 17 eine vergrößerte Ansicht des linken Bereichs von Figur 16,
Fig. 18 einen Längsschnitt durch ein erfindungsgemäßes Kugelgelenk in einem fertig montierten Zustand nach einer noch weiteren Ausführungsform,
Fig. 19 eine vergrößerte Ansicht des linken Bereichs von Figur 18,
Fig. 20 einen Längsschnitt durch ein erfindungsgemäßes Kugelgelenk in einem fertig montierten Zustand nach einer noch weiteren Ausführungsform,
Fig. 21 eine vergrößerte Ansicht des Bereichs III von Figur 20,
Fig. 22 einen Längsschnitt durch das erfindungsgemäße Kugelgelenk von Fig. 20 in einem fertig montierten Zustand, in abgewandelter Ausführungsform,
Fig. 23 einen Längsschnitt durch ein nicht erfindungsgemäßes Kugelgelenk in einem fertig montierten Zustand,
Fig. 24 eine vergrößerte Ansicht des linken Bereichs von Figur 23, und
Figur 25 einen Längsschnitt durch ein Kugelgelenk gemäß dem Stand der Technik.

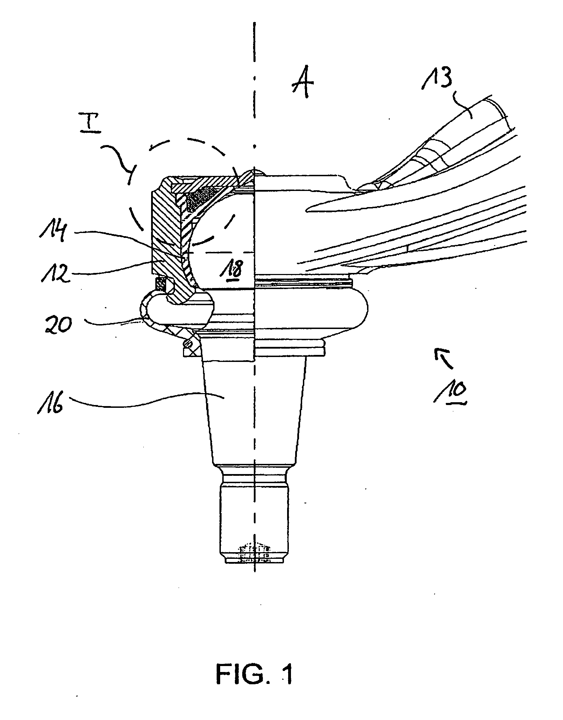

Figur 1 zeigt einen Längsschnitt durch ein erfindungsgemäßes Kugelgelenk 10, in einem fertig montierten Zustand. Das Kugelgelenk 10 umfasst ein Gelenkgehäuse 12, das an einem Ende eines Fahrwerkslenkers 13 oder dergleichen ausgebildet ist. In dem Gelenkgehäuse 12 ist eine Lagerschale 14 aufgenommen. Das Kugelgelenk 10 umfasst des Weiteren einen Kugelzapfen 16 mit einem Kugelkopf 18, wobei der Kugelkopf 18 schwenkbeweglich in der Lagerschale 14 angeordnet ist. Ein Dichtungsbalg 20 ist mit einem Ende am Gelenkgehäuse 12 befestigt, wobei das entgegengesetzte Ende des Dichtungsbalgs 20 in Kontakt mit dem Kugelzapfen 16 ist. Dieser Dichtungsbalg 20 dichtet in bekannter Weise das Gelenkgehäuse 12 nach außen ab und verhindert sowohl ein Austreten von Lagerfett als auch ein Eintreten von Schmutzpartikeln, Wasser oder dergleichen.

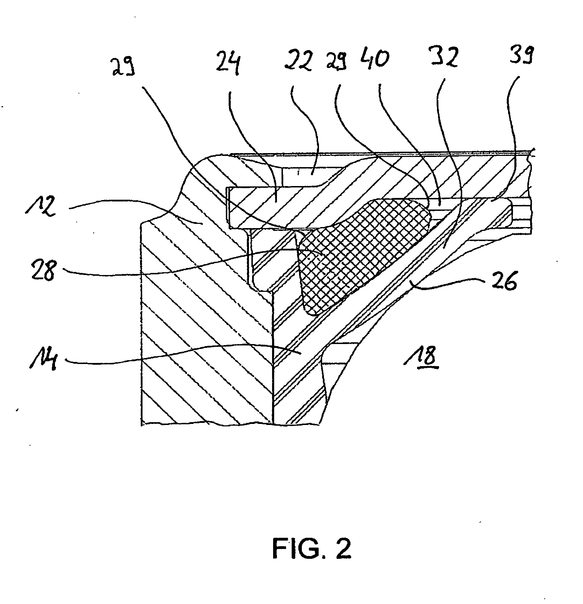

In Figur 2 ist der Bereich I von Figur 1 in vergrößerter Ansicht gezeigt. Das in Figur 1 gezeigte Kugelgelenk ist in Form eines Radialkugelgelenks ausgebildet, wobei das Gelenkgehäuse 12 eine Montageöffnung 22 aufweist. Im montierten Zustand des Kugelgelenks 10 ist die Montageöffnung 22 durch ein Verschlusselement in Form eines Gehäusedeckels 24 verschlossen. Zum Befestigen des Gehäusedeckels 24 ist ein Randbereich des Gelenkgehäuses 12 nach innen umgebördelt, so dass der Gehäusedeckel 24 formschlüssig an dem Gelenkgehäuse 12 befestigt ist. Zwischen dem Gehäusedeckel 24 und einem Polbereich 26 der Lagerschale 14 ist ein Federelement in Form eines elastischen Formrings 28 aufgenommen. Der Formring 28 ist vorzugsweise aus einem

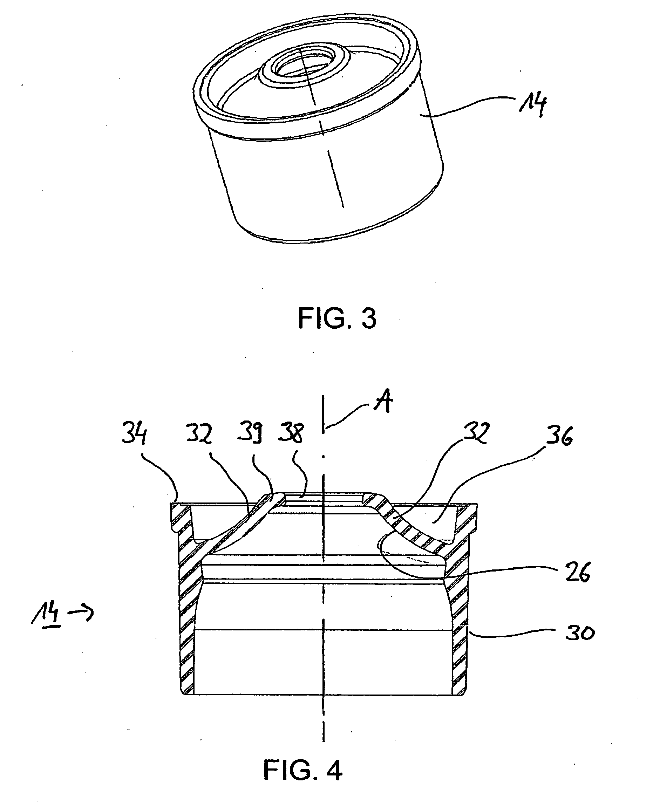

Elastomermaterial hergestellt. Figur 2 verdeutlicht, dass im montierten Zustand des Kugelgelenks 10 der Formring 28 sowohl in Kontakt mit dem Gehäusedeckel 24 als auch mit dem Polbereich 26 der Lagerschale 14 ist. Einzelheiten bezüglich der Lagerschale 14 und deren Montage in dem Gelenkgehäuse 12 in Verbindung mit dem Formring 28 sind nachstehend unter Bezugnahme auf die Figuren 3 bis 7 erläutert.

Figur 3 zeigt die Lagerschale 14 in einer Perspektivansicht, wobei Figur 4 eine Querschnittsansicht durch die Lagerschale 14 zeigt. Die Lagerschale 14 ist vorzugsweise aus einem elastischen Polymermaterial hergestellt. Die Lagerschale 14 umfasst eine zylindrische Seitenwand 30, die in dem in Figur 4 gezeigten unteren Bereich offen ist. In einem oberen Bereich der Lagerschale 14 geht die Seitenwand 30 über in den Polbereich 26, der durch eine Stirnwand 32 gebildet ist. Angrenzend an den Polbereich 26 weist die Lagerschale 14 einen randseitigen Schulterabschnitt 34 auf. Die Stirnwand 32 weist eine mittige Öffnung 38 auf, deren oberer Rand 39 in Bezug auf eine Längsachse A der Lagerschale 14 axial weiter außen als der randseitige Schulterabschnitt 34 liegt. Somit bildet der Rand der Öffnung 38 im montierten Zustand des Kugelgelenks 10 eine ringförmige Deckelkontaktfläche mit dem Gehäusedeckel 24 (vgl. Figur 2).

Figur 4 verdeutlicht, dass zwischen dem Schulterabschnitt 34 und der Stirnwand 32 eine Vertiefung 36 ausgebildet ist. In diese Vertiefung lässt sich der elastische Formring 28 einlegen. Die Stirnwand 32 ist im unbelasteten Zustand von außen betrachtet konkav ausgebildet, so dass ihre Krümmung entgegengesetzt zur Oberfläche des Kugelkopfs 18 verläuft. Die Stirnwand 32 übernimmt im montierten Zustand des Kugelgelenks 10 die Funktion eines auf dem Kugelkopf 18 wirkenden Federelements, was nachstehend noch im Detail erläutert ist.

Der Formring 28 ist insbesondere aus einem Elastomermaterial hergestellt. Beispielsweise kann der Formring 28 als separates Teil hergestellt sein, das bei der Montage des Kugelgelenks in die Vertiefung 36 eingelegt wird. Alternativ hierzu kann der Formring 28 auch direkt an der Lagerschale 14 angeformt sein - eine solche einstückige Ausgestaltung der Lagerschale 14 lässt sich beispielsweise durch ein Zweikomponenten-Spritzgießen herstellen, wobei vorzugsweise die Lagerschale aus einem Polymermaterial und der Formring aus einem Elastomermaterial bestehen.

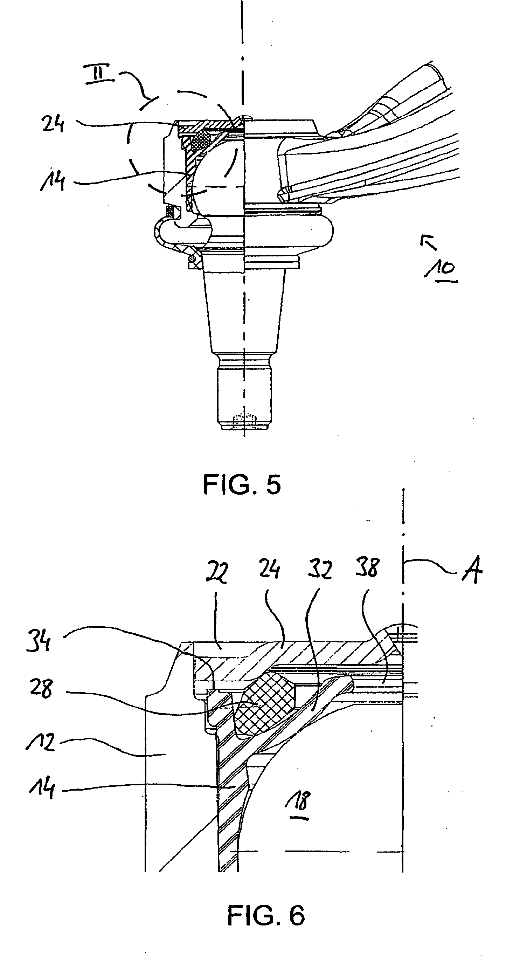

In den Figuren 5 und 6 ist das Kugelgelenk 10 in einem teilmontierten Zustand gezeigt, wobei der Gehäusedeckel 24 in die Montageöffnung 22 eingesetzt, jedoch noch nicht darin befestigt ist. Im Einzelnen zeigt Fig. 5 einen Längsschnitt durch das Kugelgelenk 10 von Figur 1 im teilmontierten Zustand, und Fig. 6 zeigt den Bereich II von Figur 5 in vergrößerter Ansicht. Vor oder bei der Montage der Lagerschale 14 in das Gelenkgehäuse 12 wird der elastische Formring 28 in die Vertiefung 36 der Lagerschale 14 eingelegt. Wenn die Lagerschale 14 in dem Gelenkgehäuse 12 aufgenommen ist, fällt ihre Längsachse A mit jener des Kugelzapfens 16 zusammen.

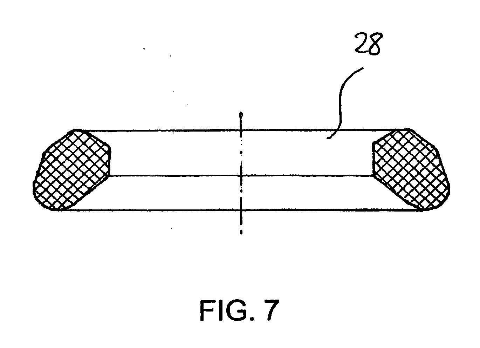

Fig. 7 zeigt den Formring 28 in einer Querschnittsansicht. Der Formring 28 ist mit seinem Querschnitt an die Form der Vertiefung 36 bzw. an einen Hohlraum 40, der zwischen dem Polbereich 26 der Lagerschale 14 und dem Gehäusedeckel 24 gebildet ist, angepasst. Dies gilt insbesondere für den Fall, wenn der Formring 28 aus einem Elastomermaterial hergestellt ist.

Für ein Verschließen des Kugelgelenks 10 wird der Gehäusedeckel 24 zunächst axial in Richtung nach unten gedrückt, bis er mit dem randseitigen Schulterabschnitt 34 der Lagerschale 14 in Kontakt gelangt. Hierbei gelangt die ringförmige Deckelkontaktfläche der mittigen Öffnung 38 der Lagerschale 14 ebenfalls in Kontakt mit dem Gehäusedeckel 24. Dies führt dazu, dass die Stirnwand 32 auf Biegung beansprucht wird und dabei den Kugelkopf 18 im Wesentlichen in Richtung der Längsachse A des Kugelzapfens 16 gegen das Gelenkgehäuse 12 vorspannt. Zusätzlich wird hierbei der elastische Formring 28 komprimiert bzw. zusammengedrückt. Infolgedessen füllt der Formring 28 die Vertiefung 36 bzw. den Hohlraum 40 zwischen dem Polbereich 26 der Lagerschale 14 und dem Gehäusedeckel 24 mehrheitlich aus (vgl. Fig. 2). Der Gehäusedeckel 24 wird in der Montageöffnung 22 geeignet befestigt, indem ein Randbereich des Gelenkgehäuses 12 nach innen umgebördelt wird.

Nachstehend ist erläutert, nach welchem Prinzip der Kugelkopf 18 im Wesentlichen in Richtung einer Längsachse des Kugelzapfens 16 durch ein Federsystem gegen das Gelenkgehäuse 12 vorgespannt wird.

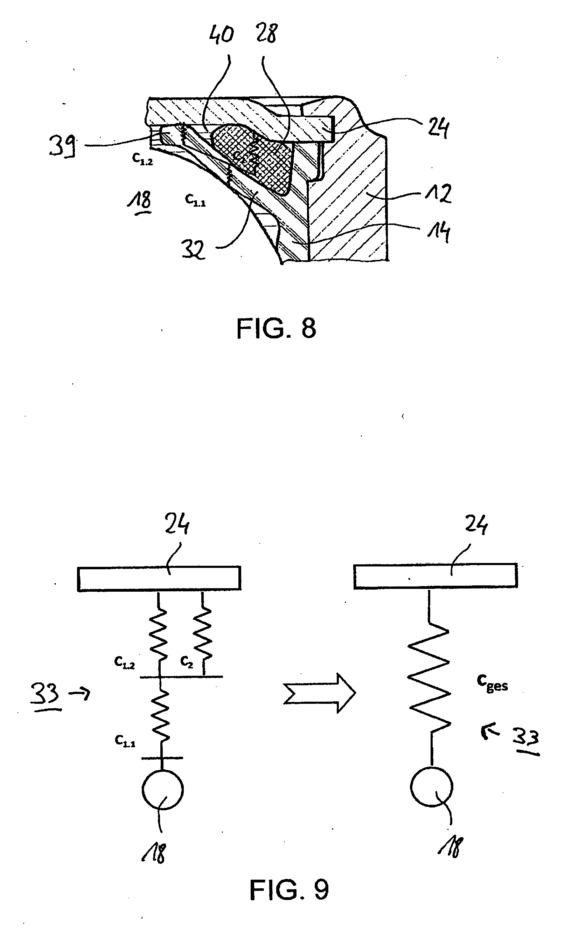

Im fertig montierten Zustand des Kugelgelenks 10 übernehmen die Stirnwand 32 der Lagerschale 14 und der elastische Formring 28 die Funktion von Federelementen, durch die eine Kraft auf den Kugelkopf 18 ausgeübt wird, um Letzeren im Wesentlichen in Richtung der Längsachse A des Kugelzapfens 16 vorzuspannen. Der Formring 28 und die Stirnwand 32 bilden gemeinsam ein Federsystem 33. In Fig.8 ist ein Ausschnitt des fertig montierten Kugelgelenks 10 gezeigt, wobei für die Stirnwand 32 und den Formring 28 die zugehörigen Federkonstanten prinzipiell kenntlich gemacht sind und Fig. 9 ein entsprechendes Federersatzschaltbild zeigt. Die Federkonstante c_{1,1} eines an den Kugelkopf 18 angrenzenden Federelements bezieht sich auf einen mittigen Bereich der Stirnwand 32, wobei die Federkonstante c₂ sich auf den elastischen Formring 28 bezieht. Des Weiteren bezieht sich die Federkonstante c_{1,2} auf den oberen Rand 39 der Stirnwand 32, wobei die Stirnwand 32 als Ganzes als Reihenschaltung der Federkonstanten c_{1,1} und c_{1,2} zu verstehen ist.

Der Polbereich 26 der Lagerschale 14 ist mit seiner Stirnwand 32 auf Biegung beansprucht, da der obere Rand 39 der mittigen Öffnung 38 in Kontakt mit dem Gehäusedeckel 24 ist (Fig. 8). Die Stirnwand 32 befindet sich in direktem Kontakt mit dem Kugelkopf 18 und übt auf diesen eine Kraft u.a. axial nach unten aus. Der elastische Formring 28 ist in dem Hohlraum 40 zwischen Gehäusedeckel 24 und Polbereich 26 aufgenommen, hat jedoch keinen direkten Kontakt zum Kugelkopf 18. Dies führt dazu, dass der mittige Bereich der Stirnwand 32, an die der Formring 28 angrenzt, und der Formring 28 eine Reihenschaltung von Federelementen (mit den Federkonstanten c_{1,1} bzw. c₂) bilden. Der obere Rand 39 der Stirnwand 32, dargestellt als Federkonstante c_{1,2} , ist mit dem Formring 28 (Federkonstante c₂) als parallel geschaltet zu verstehen.

Im Ergebnis wirken die Stirnwand 32 und der Formring 28 auf den Kugelkopf 18 nach Art eines Federsystems, bei dem die beteiligten Federelemente wie vorstehend erläutert sowohl parallel als auch in Reihe geschaltet sind. Das Federersatzschaltbild von Fig. 9 verdeutlicht nochmals das Federsystem 33 bzw. die soeben genannte Verschaltung von Stirnwand 32 und Formring 28. Durch diese Verschaltung, die eine Überlagerung von Parallel- und Reihenschaltung darstellt, lässt sich gemäß den mechanischen Gesetzmäßigkeiten, nach denen die jeweiligen Federkonstanten der beteiligten Federelemente zu einer Gesamtfedercharakteristik c_{ges} des Federsystems 33 beitragen, präzise eine Gesamtkennung dieses Federsystems einstellen. Des Weiteren ermöglicht die Auswahl der Materialien, z.B. ein Polymerkunststoff für die Lagerschale 14 und ein Elastomerkunststoff für den Formring 28, ein genaues Einstellen der Gesamtfedercharakteristik c_{ges}, auch bei einer axialen Belastung des Kugelgelenks.

Der Kugelkopf 18 wird durch das Federsystem 33 gegen das Gelenkgehäuse 12 in axialer Richtung, d.h. im Wesentlichen in Richtung der Längsachse A des Kugelzapfens 16 vorgespannt. In dieser Weise kann einem Verschleiß des Kugelgelenks 10, zum Beispiel in Form von Setzeffekten, freiem Spiel oder dergleichen, wirkungsvoll begegnet werden. Hierdurch ist es auch möglich, erforderliche Kennwerte des Kugelgelenks 10 auch über dessen Lebensdauer zu gewährleisten.

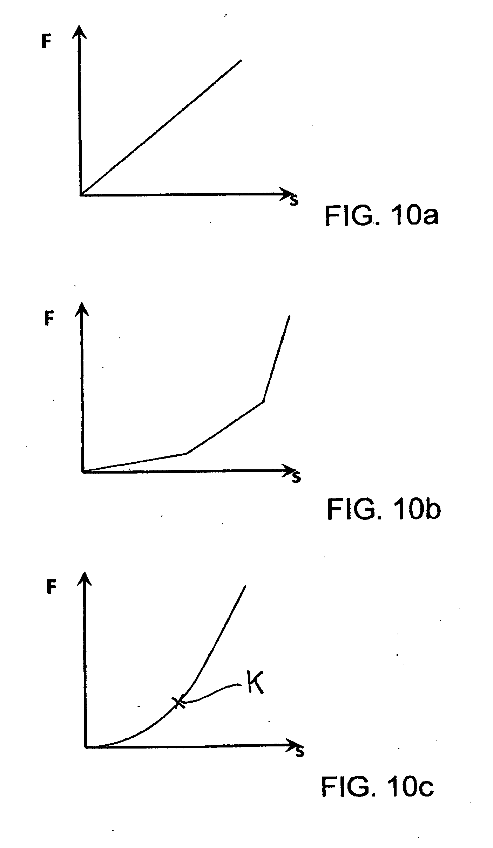

In Abhängigkeit der Materialeigenschaften der an dem Federsystem 33 beteiligten Federelemente und der Art, wie die Federelemente miteinander verschaltet sind, kann die resultierende Gesamtfedercharakteristik c_{ges} einen linearen, multilinearen oder auch nicht linearen Verlauf annehmen. Dies ist prinzipiell in den Kraft-Weg-Kennlinien gemäß der Figuren 10a, 10b bzw. 10c dargestellt. In Bezug auf die vorstehend erläuterte Ausführungsform, bei der der elastische Formring 28 aus einem Elastomer hergestellt ist, versteht sich, dass diesbezüglich die Kennlinie gemäß Fig. 10c verwirklicht ist.

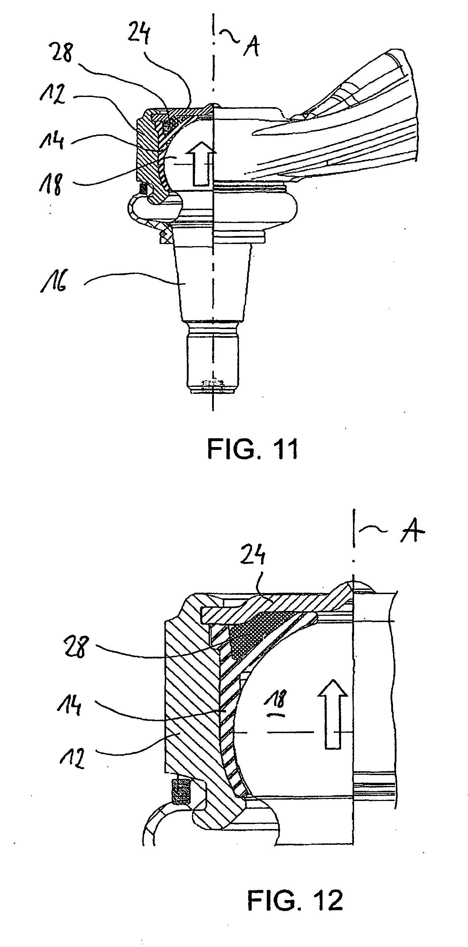

In Fig. 11 und Fig. 12 ist das Kugelgelenk 10 bei einer Belastung in axialer Richtung, d.h. in Richtung der Längsachse A gezeigt. Im Einzelnen stellt Fig. 11 einen Längsschnitt durch das Kugelgelenk 10 dar, in Entsprechung zu Fig. 1. Fig. 12 zeigt einen linken Bereich der Fig. 11 in vergrößerter Ansicht. Die axiale Belastung auf das Kugelgelenk 10 in Richtung der Längsachse A ist in Fig. 11 und Fig. 12 jeweils durch einen Pfeil kenntlich gemacht. Ein Vergleich von Fig. 2 mit Fig. 12 verdeutlicht, dass im Lastfall nun der elastische Formring 28 den Hohlraum zwischen Gehäusedeckel 24 und Polbereich 26 nicht nur mehrheitlich, sondern im Wesentlichen vollständig ausfüllt. Sobald dies im Lastfall der Fall ist, nimmt die Kennlinie (vgl. Fig. 10c) in ihrer Steigung progressiv zu, so dass die Steifigkeit des Federsystems 33 vergrößert ist. In dem Diagramm gemäß Fig. 10c ist der Punkt, ab dem der Formring 28 den Hohlraum 40 im Lastfall im Wesentlichen vollständig ausfüllt, mit "K" bezeichnet.

Neben seiner Funktion als zusätzliches Federelement gewährleistet der Formring 28 eine Betriebssicherheit des Kugelgelenks 10 insbesondere bei hohen axialen Belastungen dadurch, dass er ein Umknicken der Stirnwand 32 hinein in den Hohlraum 40 verhindert. Somit ist das Kugelgelenk 10 auch bei hohen axialen Belastungen betriebssicher ausgelegt und gegen einen Ausfall geschützt.

Der Querschnitt des elastischen Formrings 28 ist geeignet so gewählt, dass im montierten Zustand des Kugelgelenks 10 Randbereiche des Formrings 28 von Körperfugen beabstandet sind, die zwischen der Lagerschale 14 und dem Gehäusedeckel 24 bzw. einer Innenwandung des Gelenkgehäuses 12 gebildet sind. In Figur 2 ist zu erkennen, dass der Querschnitt des Formrings 28 angrenzend an solche Körperfugen geeignete Abrundungen 29 aufweist, so dass der Formring 28 nicht im Kontakt mit diesen Körperfugen gelangt. Hierdurch wird im montierten Zustand des Kugelgelenks 10 eine Beschädigung des Formrings 28 vermieden und dadurch dessen Lebensdauer erhöht.

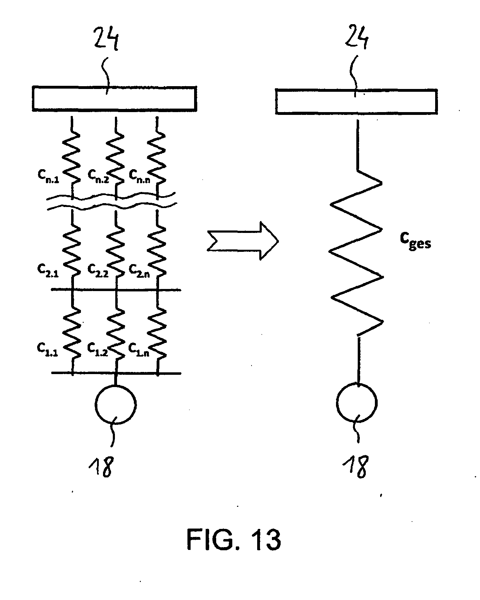

In Bezug auf ein Federsystem, durch das der Kugelkopf 18 axial vorgespannt wird, versteht sich, dass dieses im Allgemeinen aus einer Mehrzahl von Federelementen bestehen kann, die parallel und/oder in Reihe miteinander verschaltet sind. Dies ist in dem Federersatzschaltbild gemäß Fig. 13 verdeutlich. Mit dem Bezugszeichen "18" ist hierin der Kugelkopf bezeichnet, und mit dem Bezugszeichen "24" ist der Gehäusedeckel 24 bzw. eine Innenfläche des Gelenkgehäuses 12 bezeichnet. Die genannte Mehrzahl von Federelementen kann zwischen dem Kugelkopf 18 und dem Gehäusedeckel 24 (bzw. einer Innenfläche des Gehäuses 12) angeordnet sein. Im Einzelnen können angrenzend an den Kugelkopf Federelemente vorgesehen sein, die mit ihren Federkonstanten c_{1.1}, c_{1.2}, c_{1.n}, etc. parallel geschaltet sind. Hieran kann sich eine Gruppe von Federelementen anschließen, die untereinander mit ihren Federkonstanten c_{2.1}, c_{2.2,} c_{2.n}, etc. jeweils parallel, jedoch in Bezug auf die Federelemente mit den Federkonstanten c_{1.1}, c_{1.2}, c_{1.n} in Reihe geschaltet sind. Gleiches gilt für die Federelemente mit den Federkonstanten c_{n.1}, c_{n.2}, c_{n.n}, etc., sofern vorhanden. Das Federersatzschaltbild gemäß Fig. 13 verdeutlicht in seinem rechten Bildteil, dass diese Gruppe von Federelementen sich insgesamt zu einer Gesamtfedercharakteristik c_{ges} zusammenfügen, mittels der der Kugelkopf 18 gegenüber dem Gehäuse 12 vorgespannt wird.

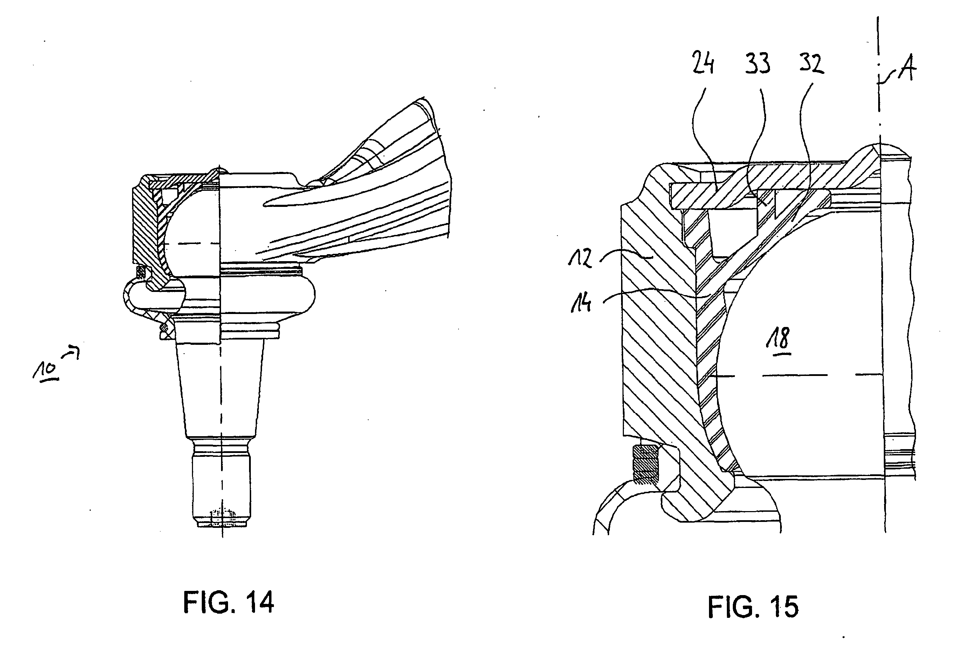

In den Fig. 14-24 sind nachstehend weitere Ausführungsformen für das Kugelgelenk 10 erläutert. Diese alternativen Ausführungsformen unterscheiden sich hinsichtlich der Ausgestaltung der Lagerschale 18 und des Aufbaus des Federsystems, mittels dessen der Kugelkopf 18 axial vorgespannt wird. Soweit das Kugelgelenk gemäß dieser alternativen Ausführungsformen im Vergleich zur Ausführungsform von Fig. 1 gleiche Merkmale aufweist, werden hierzu auch gleiche Bezugszeichen verwendet.

In Fig. 14 ist eine weitere Ausführungsform für das Kugelgelenk 10 gezeigt, wobei Fig. 15 den linken Bereich von Fig. 14 vergrößert darstellt. Fig. 14 bzw. Fig. 15 zeigen das Kugelgelenk 10 im fertig montierten Zustand. Bei dieser Ausführungsform ist an einer Oberseite des Polbereichs 26, d.h. in einem ungefähr mittigen Bereich der Stirnwand 32, ein Steg 33 angeformt, der im Wesentlichen parallel zur Längsachse A verläuft. Der Steg 33 besteht zweckmäßigerweise aus dem gleichen Material wie die Lagerschale 14 selbst, so dass diese z.B. durch Spritzgießen ohne nennenswerte Nachbearbeitung herstellbar ist. Der Steg 33 ist mit seinem oberen freien Ende in Kontakt mit dem Gehäusedeckel 24, und bildet somit eine Verbindung zwischen dem Gehäusedeckel 24 und der Stirnwand 32. In Bezug auf das Federersatzschaltbild von Fig. 9 ist der Steg 33 als Federkonstante c₂ zu verstehen, so dass er mit dem mittigen Bereich der Stirnwand 32 (Federkonstante c_{1.1}) eine Reihenschaltung von Federn bildet. Bezüglich der Ausführungsform gemäß den Fig. 14 und 15 ist zu verstehen, dass hierbei kein elastischer Formring 28 zum Einsatz kommt, da dieser durch den Steg 33 substituiert ist. Die Gesamtfedercharakteristik dieser Ausführungsform weist eine vergleichsweise große Steifigkeit auf, da der Steg 33 in seiner Längsrichtung nur wenig verformbar bzw. komprimierbar ist. Dessen ungeachtet unterliegt das Federsystem, das bei dieser Ausführungsform aus der Stirnwand 32 und dem Steg 33 gebildet ist, der gleichen Funktionsweise wie vorstehend unter Fig. 9 erläutert, so dass zur Vermeidung von Wiederholungen darauf verwiesen wird.

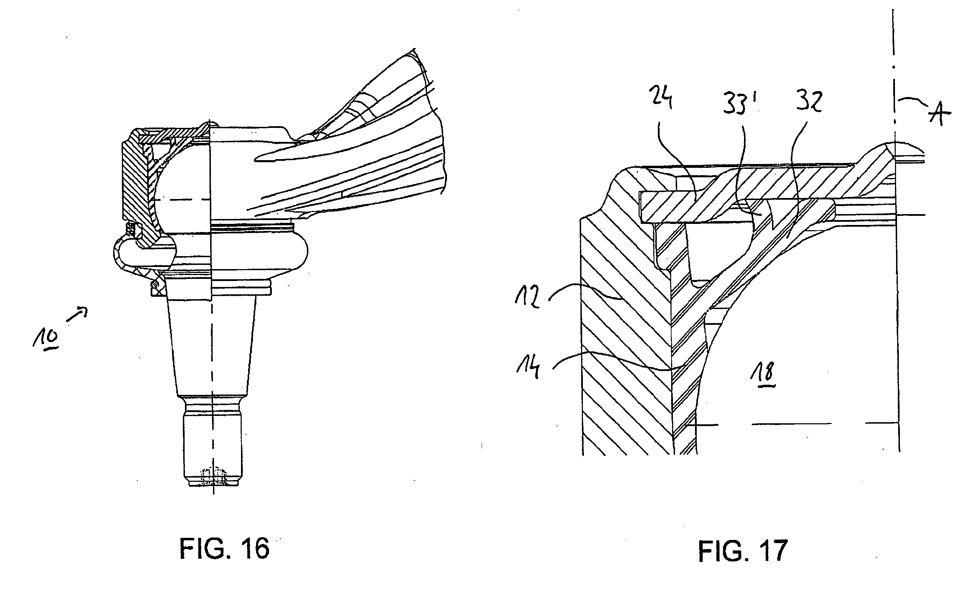

In den Fig. 16 und 17 ist eine weitere Variante für das Kugelgelenk 10 gezeigt. Fig. 16 zeigt einen Längsschnitt durch dieses Kugelgelenk, wobei Fig. 17 den linken Bereich von Fig. 16 in vergrößerter Ansicht zeigt. Diese Variante entspricht im Wesentlichen der Ausführungsform gemäß der Fig. 14. Einziger Unterschied hierbei ist, dass der Steg 33', der an der Stirnwand 32 angeformt ist, nunmehr nicht als lineare Abragung, sondern gekrümmt ausgebildet ist. Durch diese Krümmung ist die Gesamtfedercharakteristik insgesamt "weicher", da sich der Steg 33' in axialer Richtung, d.h. parallel zur Längsachse A, leichter verformen lässt, wenn das Kugelgelenk 10 in dieser Richtung unter Last gesetzt ist.

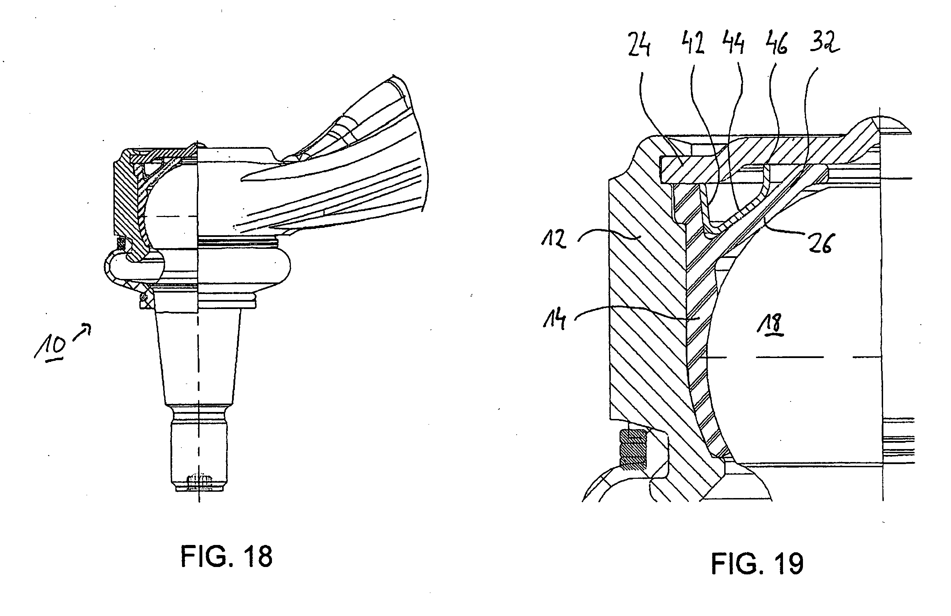

In den Fig. 18 und 19 ist eine weitere Ausführungsform für das Kugelgelenk 10 dargestellt, wobei Fig. 18 einen Längsschnitt durch dieses Gelenk und Fig. 19 den linken Bereich von Fig. 18 vergrößert zeigen. Bei dieser Ausführungsform entspricht die Ausgestaltung der Kugelschale jener von Fig. 1. Im Unterschied hierzu ist jedoch in die Vertiefung 36 kein Formring 28, sondern ein Metallring 42 eingelegt. Der Metallring 42 hat einen U-förmigen Querschnitt, mit einem Bodenbereich 44 und einem oberen Rand 46. Im montierten Zustand des Kugelgelenks 10 (vgl. Fig. 19) liegt der Bodenbereich 44 innerhalb der Vertiefung 36 auf einer Oberfläche des Polbereichs 26 auf, wobei die Schenkel des oberen Randes 46 in Kontakt mit dem Gehäusedeckel 24 sind. In seiner Funktionsweise als Federelement entspricht der Metallring 42 dem elastischen Formring 28 (Fig. 2) bzw. dem Steg 33 (Fig. 15), wobei zur Vermeidung von Wiederholungen auf die obige Erläuterung an entsprechender Stelle verwiesen wird. Der Metallring 42 bildet somit zusammen mit der Stirnwand 32 ein Federsystem, dessen Steifigkeit wegen des Metallrings 42 vergleichsweise groß ist:

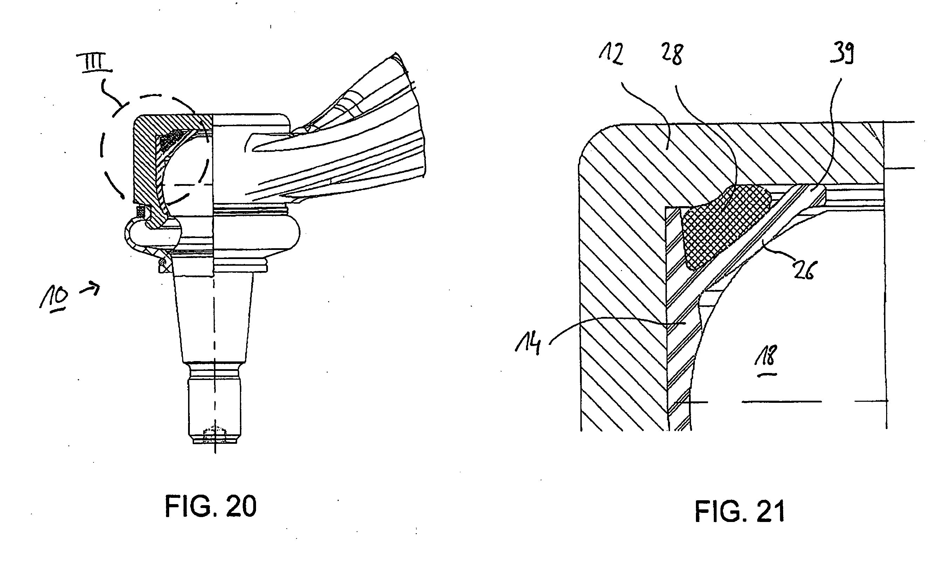

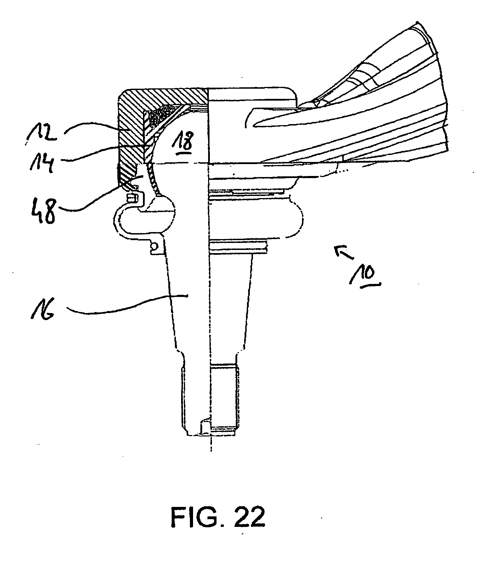

In den Fig. 20-22 ist eine weitere Variante des Kugelgelenks 10 gezeigt, wobei Fig. 20 einen Längsschnitt durch dieses Gelenk und Fig. 21 den Bereich III in vergrößerter Ansicht zeigt. Bezüglich der Funktionsweise des Federsystems 33, das aus der Stirnwand 32 und dem elastischen Formring 28 gebildet ist, entspricht diese Ausführungsform vollumfänglich dem Kugelgelenk von Fig. 1. Der Unterschied gegenüber dem Gelenk von Fig. 1 besteht darin, dass bei dieser Ausführungsform (Fig. 21) das Gelenkgehäuse 12 in seinem oberen Bereich vollständig geschlossen ausgebildet ist. Entsprechend ist kein Gehäusedeckel 24 vorgesehen. Somit sind der obere Rand 39 als auch der Formring 28 im montierten Zustand des Gelenks in Kontakt mit einer Innenfläche des Gelenkgehäuses 12. Im Hinblick auf eine Montierbarkeit dieser Ausführungsform versteht sich, dass sowohl die Lagerschale 14 als auch der Kugelkopf 18 von einer unteren Seite in das Gelenkgehäuse 12 eingeführt werden, wobei anschließend das Gelenk über eine Umformglocke verschlossen wird und eine Balgnut gedreht wird. Alternativ zu Fig. 20 ist in Fig. 22 eine Abwandlung dieser Ausführungsform gezeigt, bei der in einem unteren Bereich des Gelenkgehäuses 12 ein Verschlussring 48 befestigt ist. Dieser Verschlussring 48 wird an dem Gelenkgehäuse 12 nach einem Einsetzen von Lagerschale 14 und Kugelkopf 18 geeignet befestigt (zum Beispiel durch Verschrauben), um die Lagerschale 14 verliersicher in dem Gelenkgehäuse 12 zu halten.

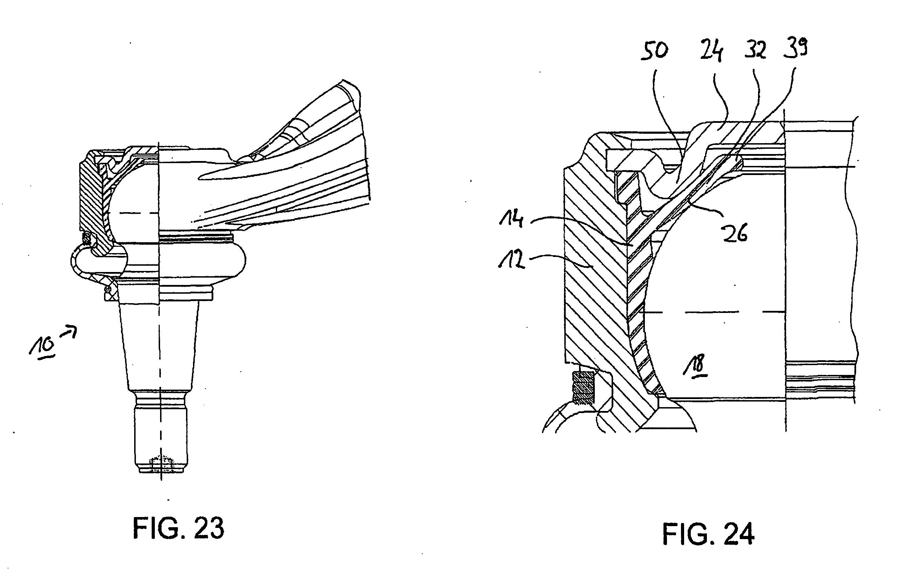

In den Fig. 23 und 24 ist eine nicht erfindungsgemäße Ausgestaltung des Kugelgelenks 10 dargestellt, wobei Fig: 23 einen Längsschnitt durch dieses Gelenk und Fig. 24 den linken Bereich von Fig. 23 in vergrößerter Ansicht zeigt. Bei dieser Ausführungsform weist der Gehäusedeckel 24 einen axial nach innen gerichteten ringförmigen Wulst 50 auf. Im montierten Zustand des Gelenks (Fig. 24) kontaktiert dieser Wulst 50 den Polbereich 26 der Kugelschale 14 bzw. dessen Stirnwand 32. In gleicher Weise wie bei der Ausführungsform von Fig. 1 ist der Gehäusedeckel 24 in dem Gelenkgehäuse 12 befestigt, indem dessen oberer äußerer Randbereich nach innen umgebördelt ist. Der Gehäusedeckel 24 ist vorzugsweise aus einem Federstahl hergestellt. Der Wulst 50 übernimmt die Funktion eines Federelements und entspricht unter Bezugnahme auf das Federersatzschaltbild von Fig. 9 der Federkonstante c₂. Solange der obere Rand 39 nicht in Kontakt mit dem Gehäusedeckel 24 ist, entspricht die Stirnwand 32 lediglich der Federkonstante c_{1.1}, weil die Federkonstante c_{1.2} gleich Null ist. Entsprechend bilden der Wulst 50 und die Stirnwand 32 in dem in Fig. 24 gezeigten Zustand eine nicht erfindungsgemäße Reihenschaltung von Federelementen, durch die der Kugelkopf 18 axial gegen das Gelenkgehäuse 12 vorgespannt wird. Falls bei einer axialen Belastung des Kugelgelenks 10 der obere Rand 39 in Kontakt mit dem Gehäusedeckel gelangen sollte, entsteht eine Verschaltung der Federelemente nach dem Prinzip von Fig. 9, weil dann der obere Rand 39 der Federkonstante c_{1.2} entspricht und eine Parallelschaltung mit dem Wulst 50 bildet. In Folge dessen nimmt die resultierende Federsteifigkeit des Federsystems zu.

## Patentansprüche

1. Kugelgelenk (10), umfassend
ein Gelenkgehäuse (12),
eine in dem Gelenkgehäuse (12) aufgenommene Lagerschale (14),
einen Kugelzapfen (16) mit einem Kugelkopf (18), der in der Lagerschale (14) schwenkbeweglich angeordnet ist, wobei der Kugelkopf (18) im Wesentlichen in Richtung einer Längsachse (A) des Kugelzapfens (16) durch ein Federsystem gegen das Gelenkgehäuse (12) vorgespannt ist, das Federsystem (33) aus parallel und/oder in Reihe geschalteten Federelementen (28, 32, 33, 50) gebildet ist, wobei zumindest ein Federelement (32) des Federsystems (33) aus einem Polymermaterial oder aus einem Elastomermaterial hergestellt ist, **dadurch gekennzeichnet, dass** ein erstes Federelement (32) des Federsystems (33) aus dem Polbereich der Lagerschale (14) gebildet ist und im montierten Zustand des Kugelgelenks (10) auf Biegung beansprucht ist und dass das erste Federelement (32) im montierten Zustand des Kugelgelenks (10) oder durch eine axiale Belastung des Kugelgelenks das Gelenkgehäuse (12) oder ein Verschlusselement (24, 48), das in einer Öffnung (22) des Gelenkgehäuses (12) befestigt ist, kontaktiert, so dass dadurch eine Feder-Parallelschaltung mit einem weiteren Federelement (28), das in Kontakt mit der Lagerschale (14) ist, resultiert.

2. Kugelgelenk (10) nach Anspruch 1, **dadurch gekennzeichnet, dass** zumindest ein Federelement (33) des Federsystems an der Lagerschale (14) angeformt ist.

3. Kugelgelenk (10) nach einem der vorhergehenden Ansprüche, **dadurch gekennzeichnet, dass** ein zweites Federelement (28, 42) des Federsystems sowohl die Lagerschale (14) als auch das Gehäuse oder ein Verschlusselement, das in einer Öffnung des Gehäuses befestigt ist, kontaktiert.

4. Kugelgelenk (10) nach Anspruch 5, **dadurch gekennzeichnet, dass** das zweite Federelement (28, 42) in Form eines Rings ausgebildet ist.

5. Kugelgelenk (10) nach Anspruch 3 oder 4, **dadurch gekennzeichnet, dass** das zweite Federelement (28, 42) separat von der Lagerschale (14) hergestellt und im montierten Zustand des Gelenks an der Lagerschale (14) angeordnet ist.

6. Kugelgelenk (10) nach Anspruch 3 oder 4, **dadurch gekennzeichnet, dass** das zweite Federelement (28), vorzugsweise durch 2K-Spritzgießen, an der Lagerschale (14) angeformt ist.

7. Kugelgelenk (10) nach einem der Ansprüche 3 bis 6, **dadurch gekennzeichnet, dass** das zweite Federelement (28) aus einem Elastomermaterial hergestellt ist.

8. Kugelgelenk (10) nach Anspruch 7, **dadurch gekennzeichnet, dass** das zweite Federelement (28) in einem Hohlraum (40) aufgenommen ist, der einerseits zwischen der Lagerschale (14) und andererseits dem Gelenkgehäuse (12) oder dem Gehäusedeckel (24) ausgebildet ist, vorzugsweise, dass das weitere Federelement den Hohlraum (40) im montierten Zustand des Kugelgelenks (10) mehrheitlich ausfüllt.

9. Kugelgelenk (10) nach Anspruch 8, **dadurch gekennzeichnet, dass** das zweite Federelement (28) mit seinem Querschnitt an den Hohlraum (40) angepasst ist, wobei das weitere Federelement (28) den Hohlraum (40) bei einer axialen Belastung des Kugelgelenks im Wesentlichen vollständig ausfüllt.

10. Kugelgelenk (10) nach Anspruch 3 oder 4, **dadurch gekennzeichnet, dass** das zweite Federelement (42, 50) aus Metall hergestellt ist.

11. Kugelgelenk (10) nach einem der Ansprüche 3 bis 10, **dadurch gekennzeichnet, dass** das Verschlusselement (24) ein drittes Federelement (50) des Federsystems (33) bildet und mit der Lagerschale (14) in Verbindung steht, vorzugsweise, dass das Verschlusselement ein Verschlussring oder ein Gehäusedeckel (24) ist.

## Claims

1. A ball joint (10), comprising
a joint housing (12),
a bearing shell (14) received in the joint housing (12),
a ball stud (16) having a ball head (18) arranged for pivoting movement in the bearing shell (14), the ball head (18) being prestressed by a spring system substantially in the direction of a longitudinal axis (A) of the ball stud (16) against the joint housing (12), the spring system (33) being composed of spring elements (28, 32, 33, 50) connected in parallel and/or in series, at least one spring element (32) of the spring system (33) being made of a polymer material or of an elastomer material, **characterized in that** a first spring element (32) of the spring system (33) is formed from the pole region of the bearing shell (14) and is subject to a bending stress in the assembled state of the ball joint (10), and that the first spring element (32) contacts the joint housing (12) or a closure element (24, 48) fastened in an opening (22) of the joint housing (12) in the assembled state of the ball joint (10) or by an axial loading of the ball joint, such that a spring parallel connection with a further spring element (28) which is in contact with the bearing shell (14) results therefrom.

2. The ball joint (10) according to claim 1, **characterized in that** at least one spring element (33) of the spring system is formed integrally with the bearing shell (14).

3. The ball joint (10) according to any of the preceding claims, **characterized in that** a second spring element (28, 42) of the spring system contacts both the bearing shell (14) and the housing or a closure element which is fastened in an opening of the housing.

4. The ball joint (10) according to claim 5, **characterized in that** the second spring element (28, 42) is configured in the form of a ring.

5. The ball joint (10) according to claim 3 or 4, **characterized in that** the second spring element (28, 42) is manufactured separately from the bearing shell (14) and is arranged on the bearing shell (14) in the assembled state of the joint.

6. The ball joint (10) according to claim 3 or 4, **characterized in that** the second spring element (28) is formed integrally with the bearing shell (14), preferably by two-component injection molding.

7. The ball joint (10) according to any of claims 3 to 6, **characterized in that** the second spring element (28) is made of an elastomer material.

8. The ball joint (10) according to claim 7, **characterized in that** the second spring element (28) is received in a cavity (40) which is formed between the bearing shell (14) on one side and the joint housing (12) or the housing cover (24) on the other side, preferably **in that** the further spring element fills the majority of the cavity (40) in the assembled state of the ball joint (10).

9. The ball joint (10) according to claim 8, **characterized in that** the second spring element (28) is adapted to the cavity (40) by means of its cross-section, the further spring element (28) filling the cavity (40) substantially entirely in case of an axial loading of the ball joint.

10. The ball joint (10) according to claim 3 or 4, **characterized in that** the second spring element (42, 50) is made of metal.

11. The ball joint (10) according to any of claims 3 to 10, **characterized in that** the closure element (24) forms a third spring element (50) of the spring system (33) and communicates with the bearing shell (14), preferably **in that** the closure element is a closure ring or a housing cover (24).

## Revendications

1. Articulation sphérique (10), comportant
un boîtier d'articulation (12),
une coquille de coussinet (14) reçue dans le boîtier d'articulation (12),
un pivot sphérique (16) présentant une tête sphérique (18) agencée à pivotement dans la coquille de coussinet (14), la tête sphérique (18) étant précontrainte contre le boîtier d'articulation (12) sensiblement dans le sens d'un axe longitudinal (A) du pivot sphérique (16) au moyen d'un système de ressort, le système de ressort (33) étant formé par des éléments à ressort (28, 32, 33, 50) montés en parallèle et/ou en série, au moins un élément à ressort (32) du système de ressort (33) étant réalisé en une matière polymère ou une matière élastomère, **caractérisée en ce qu'**un premier élément à ressort (32) du système de ressort (33) est formé à partir de la zone polaire de la coquille de coussinet (14) et est soumis à des efforts de flexion à l'état monté de l'articulation sphérique (10), et **en ce qu'**à l'état monté de l'articulation sphérique (10) ou en raison d'une sollicitation axiale de l'articulation sphérique, le premier élément à ressort (32) contacte le boîtier d'articulation (12) ou un élément de fermeture (24, 48) fixé dans un orifice (22) du boîtier d'articulation (12), de telle sorte qu'il en résulte un montage en parallèle de ressorts avec un autre élément à ressort (28) qui est en contact avec la coquille de coussinet (14).

2. Articulation sphérique (10) selon la revendication 1, **caractérisée en ce qu'**au moins un élément à ressort (33) du système de ressort est moulé avec la coquille de coussinet (14).

3. Articulation sphérique (10) selon l'une des revendications précédentes, **caractérisée en ce qu'**un deuxième élément à ressort (28, 42) du système de ressort contacte tant la coquille de coussinet (14) que le boîtier ou un élément de fermeture fixé dans un orifice du boîtier.

4. Articulation sphérique (10) selon la revendication 5, **caractérisée en ce que** le deuxième élément à ressort (28, 42) est réalisé sous forme d'anneau.

5. Articulation sphérique (10) selon la revendication 3 ou 4, **caractérisée en ce que** le deuxième élément à ressort (28, 42) est fabriqué séparément de la coquille de coussinet (14) et est agencé sur la coquille de coussinet (14) à l'état monté de l'articulation.

6. Articulation sphérique (10) selon la revendication 3 ou 4, **caractérisée en ce que** le deuxième élément à ressort (28) est moulé avec la coquille de coussinet (14) de préférence par moulage par injection à deux composants.

7. Articulation sphérique (10) selon l'une des revendications 3 à 6, **caractérisée en ce que** le deuxième élément à ressort (28) est réalisé en une matière élastomère.

8. Articulation sphérique (10) selon la revendication 7, **caractérisée en ce que** le deuxième élément à ressort (28) est reçu dans une cavité (40) réalisée entre la coquille de coussinet (14), d'une part, et le boîtier d'articulation (12) ou le couvercle de boîtier (24), d'autre part, de préférence de manière à ce que l'autre élément à ressort remplisse en majeure partie la cavité (40) à l'état monté de l'articulation sphérique (10).

9. Articulation sphérique (10) selon la revendication 8, **caractérisée en ce que** le deuxième élément à ressort (28) est adapté à la cavité (40) par sa section transversale, l'autre élément à ressort (28) remplissant la cavité (40) sensiblement entièrement lors d'une sollicitation axiale de l'articulation sphérique.

10. Articulation sphérique (10) selon la revendication 3 ou 4, **caractérisée en ce que** le deuxième élément à ressort (42, 50) est réalisé en métal.

11. Articulation sphérique (10) selon l'une des revendications 3 à 10, **caractérisée en ce que** l'élément de fermeture (24) forme un troisième élément à ressort (50) du système de ressort (33) et est relié à la coquille de coussinet (14), de préférence **en ce que** l'élément de fermeture est un anneau de fermeture ou un couvercle de boîtier (24).
